# EUROPÄISCHE PATENTANMELDUNG

(11) **EP 0 870 422 A2**
(43) Veröffentlichungstag der Anmeldung: **14.10.1998**
(21) Anmeldenummer: 98106107.0
(22) Anmeldetag: 03.04.1998
(51) Int. Cl.: A01C 15/00

(54) **Schleuderdüngerstreuer**

(30) Priorität: 10.04.1997 DE 19714936; 10.04.1997 DE 19714935; 10.04.1997 DE 19714934
(71) Anmelder: Amazonen-Werke H. Dreyer GmbH & Co. KG, D-49205 Hasbergen (DE)
(72) Erfinder: Dreyer, Heinz Dr., Dipl. Ing., 49205 Hasbergen (DE)

(57) **Zusammenfassung**

Schleuderdüngerstreuer mit zumindest zwei in Fahrtrichtung gesehen hintereinander angeordneten Vorratsbehältern (1,2) für die getrennte Mitführung von zumindest zwei verschiedenen Düngersorten, wobei jedem Vorratsbehälter jeweils zumindest zwei eigene Dosier- und Verteilorgane (23,25) zugeordnet sind. Auf der Vorderseite des vorderen Vorratsbehälters (1) ist ein den Schleuderdüngerstreuer tragender Dreipunktkrahmen (12) angeordnet. Die vordere obere Kante (35) des Vorratsbehälters sowie die Unter- und Oberlenkeranschlüsse (12,36) liegen zumindest annähernd in einer senkrechten Ebene, die durch die vorderen Punkte (37) des größtmöglichen Schaufelendenumlaufkreises der unteren Schleuderscheibe (18) verläuft. Die hintere Kante (38) des hinteren Vorratsbehälters (2) liegt, bezogen auf die Fahrtrichtung (6), vor dem hintersten Punkt (39) des größtmöglichen Schaufelendenumlaufkreises der oberen Schleuderscheibe (18). Den Vorratsbehältern ist ein in gleicher Höhe liegendes, gemeinsames und durchgehendes dachförmiges Mittelteil (7) zugeordnet, welches auf der Vorderseite mit dem Tragrahmen (11) im Höhenbereich des oberen Dreipunktanlenkpunktes (12) verbunden ist.

## Beschreibung

Die Erfindung betrifft einen Schleuderdüngerstreuer gemäß des Oberbegriffes des Patentanspruches 1.

Ein derartiger Schleuderdüngerstreuer ist in der EP-04 97 166 A1 beschrieben. Aus dieser Druckschrift ist nicht zu entnehmen, ob es sich um eine Anbau- oder gezogene Maschine handelt.

Der Erfindung liegt die Aufgabe zugrunde, den eingangs genannten Schleuderdüngerstreuer als Dreipunktanbaumaschine mit günstiger Schwerpunktlage auszubilden.

Diese Aufgabe wird erfindungsgemäß durch die kennzeichnenden Merkmale des Anspruches 1 gelöst. Infolge dieser Maßnahmen wird eine sehr günstige Lage des Schwerpunktes für eine Dreipunktanbaumaschine erreicht. Der Schleuderdüngerstreuer wird sehr kompakt ausgebildet.

Als besonders vorteilhaft hat sich herausgestellt, daß der Schwerpunktabstand zumindest annähernd die Hälfte des größtmöglichen Durchmessers der Schaufelumlaufkreise der unteren Schleuderscheiben beträgt. Hierdurch ergibt sich eine sehr gedrungene Bauweise des Schleuderdüngerstreuers. Eine vorteilhafte Abmessung des Vorratsbehälters wird dadurch erreicht, daß der größtmögliche Wurtschaufelumlaufkreis zumindest annähernd der Vorratsbehältererstreckung des Schleuderdüngerstreuers, in Fahrtrichtung gesehen, entspricht. Hierdurch ergibt sich weiterhin die Voraussetzung für möglichst große Arbeitsbreiten.

Um insbesondere die Behälterausbildung dieses Schleuderdüngerstreuers zu optimieren, werden die Merkmale des Anspruches 7 vorgesehen.

Infolge dieser Maßnahmen ergibt sich ein durchgehendes dachförmiges Mittelteil. Hierdurch ergibt sich eine wesentliche Stabilisierung des Vorratsbehälters sowie eine einfachere Ausbildung der beiden Vorratsbehälter. Eine weitere Vereinfachung der beiden Vorratsbehälter für den Schleuderdüngerstreuer wird dadurch erreicht, daß die äußeren seitlichen Trichterwände der vorderen und hinteren Vorratsbehälter miteinander fluchten. Vorteilhaft ist hierbei, daß die unteren Trichterenden des vorderen und hinteren Vorratsbehälters auf gleicher Höhe liegen.

Eine optimale Schwerpunktlage wird in einer Ausführungsform in einfacher Weise dadurch erreicht, daß die Vorderwand des vorderen Vorratsbehälters steiler als die Rückwand des hinteren Vorratsbehälters angeordnet ist.

Um bei dem Schleuderdüngerstreuer, bei dem die dem vorderen Vorratsbehälter zugeordneten Schleuderscheiben in einer Ebene unterhalb der dem hinteren Vorratsbehälter zugeordneten Schleuderscheiben angeordnet sind, eine vorteilhafte Aufgabe des Materials auf den Schleuderscheiben zu gewährleisten, ist vorgesehen, daß jeweils ein das Material von den unteren Trichterenden des vorderen Vorratsbehälters zu den diesem Vorratsbehälter zugeordneten Schleuderscheiben leitendes Leitelement angeordnet ist. Hierbei ist das Leitelement als Zuführschacht mit an dessen unteren Enden angeordnetem Dosierorgan ausgebildet. Hierdurch wird erreicht, daß das Material in unmittelbarer Nähe der Schleuderscheiben diesen Schleuderscheiben zudosiert wird.

Eine kompakte Bauweise des Schleuderdüngerstreuers läßt sich dadurch erreichen, daß die Drehachsen der unteren Schleuderscheiben in Seitenansicht gesehen sich etwa in der Mitte zwischen den unteren Trichterenden der beiden Vorratsbehälter befinden. Hierdurch ergibt sich eine vorteilhafte Schwerpunktlage für den Schleuderdüngerstreuer und eine optimale Raumausnutzung für die Anordnung der Schleuderscheiben.

Um ein vorteilhaftes Befüllen bei einem Schleuderdüngerstreuer, bei dem zwischen den beiden Vorratsbehältern eine diese trennende Trennwand angeordnet ist, zu gewährleisten, ist vorgesehen, daß an dem oberen Ende der Trennwand sich ein das Befüllen der Vorratsbehälter erleichterndes Element anschließt.

Um eine optimierte Behälterform für einen Schleuderstreuer zu schaffen, ist vorgesehen, daß die unteren Trichterenden der Vorratsbehälter auf gleicher Höhe liegen, und daß die vorderen und hinteren Trichterwände in Seitenansicht gesehen miteinander fluchten. Infolge dieser Maßnahmen ergibt sich ein einfach ausgebildeter Vorratsbehälter, der einfach und preiswert herzustellen ist.

Um bei einem Schleuderdüngerstreuer, bei dem die dem mittleren Vorratsbehälter zugeordneten Schleuderscheiben in einer Ebene unterhalb der den beiden äußeren Vorratsbehältern zugeordneten Schleuderscheiben angeordnet sind, trotz der kompakten Bauweise das Material zuführen zu können, ist vorgesehen, daß jeweils ein das Material von den unteren Trichterenden des mittleren Vorratsbehälters zu den diesem Vorratsbehälter zugeordneten Schleuderscheiben leitende Leitelemente vorgesehen sind.

Um eine vorteilhafte Dosierung des Materials für die diesen Leitelementen zugeordneten Schleuderscheiben zu schaffen, ist vorgesehen, daß das jeweilige Leitelement als Zuleitungsschacht mit an dessen unteren Ende angeordnetem Dosierorgan ausgebildet ist.

Eine kompakte Bauweise des Schleuderdüngerstreuers wird dadurch erreicht, daß der Zuleitungsschacht von den Trichterenden des mittleren Vorratsbehälters zur Seite und nach unten geführt ist.Hierbei ist vorteilhaft, daß die das Material auf die unteren Schleuderscheiben leitenden Elemente unterhalb der oberen Schleuderscheiben innerhalb der von den äußersten Teilen der Schleuderscheiben beschriebenen Umlaufbahnen enden. Hierdurch wird ein Bereich geschaffen, in den die Schleuderscheiben sehr dicht innen angeordnet werden können.

Damit kein Materialstau in den Zuleitungsschächten auftritt, ist vorgesehen, daß der Zuleitungsschacht sich nach unten erweitert.

Weitere Einzelheiten der Erfindung sind den übrigen Unteransprüchen, der Beispielsbeschreibung und den Zeichnungen zu entnehmen. Hierbei zeigen
- Fig.1: den Schleuderdüngerstreuer in der Ansicht von hinten und in Prinzipdarstellung,
- Fig.2: den Schleuderdüngerstreuer gemäß Fig.1 in Seitenansicht und in Prinzipdarstellung,
- Fig.3: einen weiteren Schleuderdüngerstreuer in der Ansicht von hinten und in Prinzipdarstellung und
- Fig.4: den Schleuderdüngerstreuer gemäß Fig.3 in Seitenansicht.

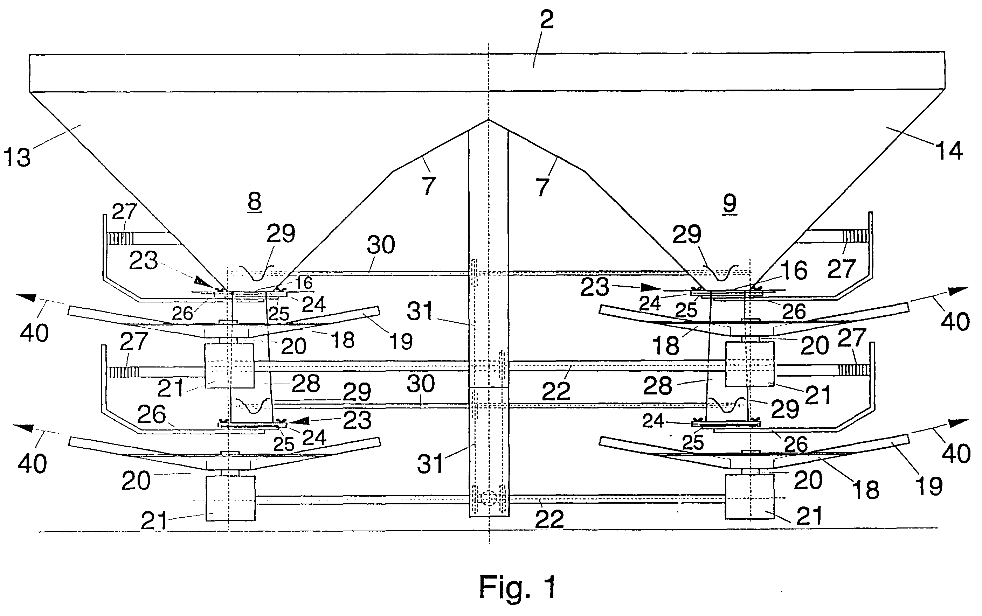

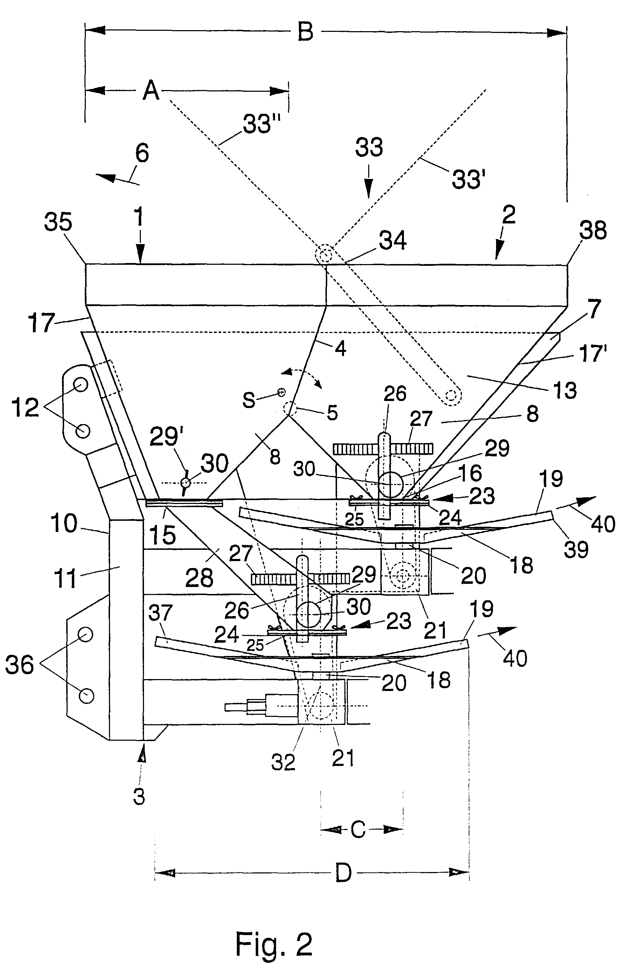

Der Schleuderdüngerstreuer gemäß den Fig.1 und 2 weist die beiden hintereinander angeordneten Vorratsbehälter 1 und 2 sowie den Rahmen 3 auf. Der Rahmen 3 ist in Fig.1 aus Gründen der Übersichtlichkeit nicht dargestellt. Die beiden Vorratsbehälter 1 und 2 sind durch die Trennwand 4 voneinander getrennt, die wie mit gestrichelten Linien angedeutet, mittels eines mit durchbrochenen Linien dargestellten Gelenkes 5 schwenkbar zur Variation des Fassungsvermögens angeordnet sein kann. Diese zwischen den beiden Vorratsbehältern 1 und 2 trennende Trennwand 4 kann herausnehmbar, absenkbar oder wegklappbar angeordnet sein.

Die beiden Vorratsbehälter 1 und 2 sind durch das in Fahrtrichtung 6 sich erstreckende dachförmige Mittelteil 7 jeweils im unteren Bereich in die Auslauftrichter 8 bzw. 9 aufgeteilt. Auf der Vorderseite 10 des vorderen Vorratsbehälters 1 ist ein den Schleuderdüngerstreuer tragender Dreipunktanbaurahmen 11, der Teil des Rahmens 3 ist, angeordnet. Aufgrund seiner durchgehenden Ausbildung liegt das dachförmige Mittelteil 7 der beiden Vorratsbehälter 1 und 2 liegt auf gleicher Höhe. Der obere Bereich des dachförmigen Mittelteils 7 ist auf seiner Vorderseite mit dem Dreipunktanbaurahmen 11 im Höhenbereich des oberen Dreipunktanlenkpunktes 12 des Dreipunktanbaurahmens 11 verbunden.

Die äußeren seitlichen Trichterwände 13 und 14 des vorderen Vorratsbehälters 1 und des hinteren Vorratsbehälters 2 fluchten miteinander, wie Fig.1 zeigt. Die unteren Trichterenden 15 und 16 der vorderen und hinteren Vorratsbehälter 1 und 2 liegen auf gleicher Höhe, wie Fig.2 zeigt. Die Vorderwand 17 des vorderen Vorratsbehälters 1 kann steiler als die Rückwand 17' des hinteren Vorratsbehälters 2 angeordnet sein.
Jedem unteren Trichterende 15 und 16 der Vorratsbehälter 1 und 2 ist eine Schleuderscheibe 18 mit darauf angeordneten Wurfschaufeln 19 zugeordnet. Die Wurfschaufeln 19 können in Scheibenebene mit unterschiedlichen Winkeln zur Radialen eingestellt werden, um so durch die unterschiedliche Winkelanstellung der Wurfschaufeln 19 für unterschiedliche Materialsorten und Arbeitsbreiten eine gleichmäßige Düngerverteilung erzielen zu können.

Weiterhin kann vorgesehen sein, daß verschieden ausgebildete Wurfschaufel- oder Schleuderscheibensätze zur Anpassung an verschiedene Arbeitsbreiten- und Streubreitenbereiche zum Einsatz kommen.

Die Schleuderscheiben 18 sind aus diesem Grunde auswechselbar auf ihren Antriebswellen 20 angeordnet. Die Schleuderscheiben 18 werden über Winkelgetriebe 21 von der Schlepperzapfwelle und über Getriebezüge 22 angetrieben. Es ist jedoch auch möglich, die Schleuderscheiben 18 mittels Hydraulikmotoren anzutreiben.

Den Trichterenden 15 und 16 sind Dosierorgane 23 zugeordnet. Den Trichterenden 16 des hinteren Vorratsbehälters 2 sind als Bodenplatten 24 mit Auslauföffnungen, die über Schieber 25 in ihrer Öffnungsweite einzustellen und zu verschließen sind, ausgebildete Dosierorgane zugeordnet. Die Schieber 25 können mittels Einstellelementen verstellt werden. Die Öffnungsweite läßt sich über Anschlagelemente 26, die mit Skalen 27 zusammenwirken, festlegen. Es ist auch möglich, die Schieber 25 mittels elektrischer Einstellelemente elektronisch einzustellen.

Den vorderen Trichterenden 15 ist jeweils ein das Material von den Trichterenden 15 zu den Schleuderscheiben 18 leitendes Leitelement 28 zugeorndet. Dieses Leitelement 28 ist als Zuführschacht mit an dessen unteren Enden angerodnetem Dosierorgan 23 ausgebildet. Der Zuführschacht 28 erweitert sich stätig nach unten. Dieses Dosierorgan 23 weist eine Bodenplatte 24 mit Auslauföffnung auf. Die Auslauföffnung ist über einen Schieber 25 in ihrer Öffnungsweite einstellbar und verschließbar. Die Schieber können mittels Einstellelementen verstellt werden. Die Öffnungsweite läßt sich über Anschlagelemente 26, die mit Skalen 27 zusammenwirken, einstellen. Es ist auch möglich, die Schieber 25 mittels elektronischer Einstellelemente elektrisch einzustellen.

Es ist jedoch auch möglich, das Dosierorgan 23 zwischen den Trichterenden 15 und dem Leitelement 28 anzuordnen. Das Leitelement kann auch als Förderband, etc. ausgebildet sein.
Oberhalb jeder Bodenplatte 24 ist jeweils ein Rührorgan 29 auf einer Rührwelle 30 angeordnet. Auch dem vorderen Trichterende 15 ist eine Rührwelle 30 mit Rührelementen 29' zugeordnet. Die Rührwellen 29 werden über einen Antrieb 31 in bekannter und daher nicht näher erläuterter Weise angetrieben.

Die Drehachsen 32 der unteren Schleuderscheiben 18 befinden sich in Seitansicht gesehen etwa in der Mitte zwischen den unteren Trichterenden 15 und 16 der beiden Vorratsbehälter 1 und 2.

Oberhalb der die beiden Vorratsbehälter 1 und 2 trennenden Trennwand 4 kann eine das Befüllen der Vorratsbehälter 1 und 2 erleichternde Rutsche 33 angeordnet sein. Diese Rutsche 33 ist zum Befüllen der jeweiligen Vorratsbehälter in die Stellung 33' oder in die Stellung 33'' bringbar. Die Rutsche 33 ist an Schwenkelementen 34 befestigt, um die Rutsche 33 auch in einen Bereich hinter den Vorratsbehälter 2 bringen zu können.

Die vordere obere Kante 35 des Vorratsbehälters 1 sowie die Unter- 36 und Oberlenkeranschlüsse 12 des Dreipunktanbaurahmens 11 verlaufen zumindest annähernd in einer senkrechten Ebene, die durch die vorderen Punkte 37 des größmöglichen Schaufelendenumlaufkreises der unteren Schleuderscheibe 18 verläuft. Die hintere Kante 38 des hinteren Vorratsbehälters 2 liegt bezogen auf die Fahrtrichtung 6 vor dem hintersten Punkt 39 des größtmöglichen Schaufelendenumlaufkreises der Schleuderscheibe 18. Hierdurch ergibt sich eine sehr kompakte Bauweise des Schleuderdüngerstreuers. Der Abstand A des Schwerpunktes S des Schleuderdüngerstreuers zu den Unterlenkeranschlüssen 36 beträgt zumindest annähernd die Hälfte des größtmöglichen Durchmessers D des Schaufelendenumlaufkreises der unteren Schleuderscheibe 18. Der größtmögliche Durchmesser D des Wurtschaufelendenumlaufkreises beträgt etwa 1480 mm. Desweiteren entspricht der größtmögliche Durchmesser D des Wurfschaufelumlaufkreises zumindest annähernd der Vorratsbehältererstreckung B des Schleuderdüngerstreuers in Fahrtrichtung 6 gesehen. Der Schwerpunktabstand A zu den Unterlenkeranschlußelementen 36 beträgt etwa zwischen 60 und 80 cm, vorzugsweise etwa 70 bis 75 cm. Der Abstand C zwischen den Schleuderscheibenantriebswellen 20 der unteren und oberen Schleuderscheiben 18 ist in Fahrtrichtung 6 gesehen um zumindest das 0,7-fache kleiner als der größtmögliche Durchmesser D des Wurfschaufelendenumlaufkreises der Schleuderscheiben 18.

Die das Material auf die unteren Schleuderscheiben 18 leitenden Zulaufschächte 28 enden unterhalb der oberen Schleuderscheiben 18 innerhalb der von den äußeren Teilen dieser Schleuderscheiben 18 beschriebenen Umlaufbahnen. Diese als Materialzuleitungselemente ausgebildeten Zulaufschächte 28 enden in einem geringen Abstand oberhalb der umlaufenden Teile der unteren Schleuderscheibe 28. Der jeweilige Zuleitungsschacht 28 erweitert sich stetig nach unten, um eine Materialverstopfung innerhalb des Zuleitungsschachtes 28 zu vermeiden. Der Zuleitungsschacht 28 ist von den unteren Trichterenden 15 des vorderen Vorratsbehälters 1 schräg nach hinten und unten gerichtet.

Die Rührorgane 29, 29' in den Zuleitungsschächten 28 und in den Vorratsbehältertrichterenden 15 und 16 können mechanisch oder hydraulisch angetrieben werden. Es ist auch möglich, die Rührorgane 29 von den Schleuderscheibenantriebswellen 20 anzutreiben.

Die auf einer Ebene angeordneten Schleuderscheiben 18 können derart angetrieben sein, daß sie auf ihren einander zugekehrten Seite in Fahrtrichtung 6 nach hinten auseinander oder auf ihren einander zugekehrten Seite in Fahrtrichtung 6 gesehen nach vorne auseinander drehend angetrieben sind.

Wie bereits vorerwähnt, sind die Dosierorgane 23 als Auslauföffnungen und die Auslauföffnungen verschließbare und einstellbare Schieber 25 mit zugeordneten einstellbaren Anschlagelementen 26 zur Bestimmung der Öffnungsweite der Auslauföffnungen ausgebildet. Die den jeweiligen Schiebern 25 und Anschlagelemente 26 und die den Einstellelementen 27 zugeordneten Einstellskalen sind seitlich des Vorratsbehälters 2 bzw. der Zulaufschächte 28 angeordnet.

Anstelle der Anschlagelemente 26 und Skalen 27 zur Bestimmung der Öffnungsweite der Auslauföffnungen können auch an den Schiebern 25 angreifende elektrische Stellelemente vorgesehen sein. Diese Stellelemente sind elektronisch ansteuerbar. Die einzelnen Schieber 25 der verschiedenen Dosierorgane 23 sind gleichzeitig oder unabhängig voneinander einstellbar, so daß jeder Schleuderscheibe 18 die gleiche oder verschiedene Materialmengen zuführbar sind.

Die die Dosierorgane 23 einstellende elektronische Regeleinrichtung ist derart ausgebildet, daß die Dosierorgane 23 individuell einstellbar sind. In der Regeleinrichtung ist teilflächenspezifisch die Nährstoffversorgung des Bodens oder entsprechende Nährstoffbedarf des Bodens für den Pflanzenbestand abgespeichert. In Abhängigkeit dieser abgespeicherten Daten in Verbindung mit einer Standortbestimmungseinrichtung (DGPS) erfolgt automatisch eine entsprechende Einstellung der Dosierorgane 23.

Die Dosierorgane 23 entsprechen in ihrer Ausbildung und Zuordnung zu den als Schleuderscheiben 18 mit Wurfschaufeln 19 ausgebildeten Verteilorganen denen von Schleuderdüngerstreuern aus Großserien. An den Anschlußelementen an den Vorratsbehältertrichterenden 15 und 16 und den Auslaufschächten 28 sind Dosierorgane 23 mit verschiedenen Betätigungselemente von Schleuderdüngerstreuern aus Großserien an den Vorratsbehältern 1 und 2 anbringbar. Die Lage der Auslauföffnungen zu den als Schleuderscheiben 18 ausgebildeten Verteilorganen entsprechen der Ausbildung der Dosierorgane 23 von Schleuderdüngerstreuern aus Großserien. Die als Schleuderscheiben 18 ausgebildeten Verteilorgane sind entsprechend den Schleuderscheiben von Schleuderdüngerstreuern aus Großserien ausgebildet.

Die Schleuderscheiben 18 und die Wurfschaufeln 19 sind derart ausgebildet, daß Sie die Düngerpartikel mit einem Winkel zur Horizontalen nach schräg oben in Pfeilrichtung 40 abschleudern.

Es ist jedoch auch möglich, die oberen Scheuderscheiben und die diesen zugeordneten Dosierorganen unter einem Winkel von der Horizontalen abweichend nach unten geneigt anzuordnen bzw. einzustellen, auszubilden. Weiterhin ist es möglich, die unteren Schleuderscheiben und zugeordneten Dosierorgane unter einem Winkel von der Horizontalen abweichend nach oben geneigt anzuordnen bzw. einstellbar auszubilden.

Wie bereits eingangs erwähnt, ist der Schleuderdüngerstreuer zum Ausstreuen von zwei verschiedenen Düngersorten ausgebildet. In dem vorderen Vorratsbehälter 1 wird eine andere Düngersorte als in den hinteren Vorratsbehälter 2 eingefüllt. Die beiden oberen Schleuderscheiben 18 schleudern die Materialpartikel der sich in dem hinteren Vorratsbehälter 2 befindlichen Düngersorte über den gleichen Arbeitsbreitenbereich wie die unteren Schleuderscheiben 18, die die Materialpartikel der sich in dem vorderen Vorratsbehälter 1 befindlichen Düngersorte abschleudern. Wie bereits erwähnt, kann die jeder Schleuderscheibe 18 zugeführte Materialmenge individuell gleich oder unterschiedlich über die Dosierorgane 23 eingestellt werden.

Beim gleichzeitigen Ausbringen von zwei verschiedenen Düngersorten sind derartige Schleuderscheiben 18 und Wurfschaufeln 19 vorgesehen, daß jede Düngersorte in zwei aneinander angrenzenden und teilweise überlappenden Arbeitsbreitenstreifenbereichen ausgestreut wird.

Es ist jedoch auch möglich, mit dem Schleuderdüngerstreuer eine einzige Materialsorte auszustreuen. Hierzu wird in beiden Vorratsbehältern 1 und 2 die gleiche Materialsorte eingeführt. Hierbei ist es dann möglich, derartige Schleuderscheiben 18 und Wurfschaufeln 19 vorzusehen, daß der Dünger in vier einander angrenzenden und teilweise überlappenden Arbeitsbreitenstreifen ausgestreut wird. Hier kann dann in vier Arbeitsstreifen individuell die Düngerausbringung angepaßt und eingestellt werden.

Bei dem Ausstreuen einer einzigen Düngersorte bestreuen die oberen Schleuderscheiben 18 den inneren Arbeitsbreitenbereich und die unteren Schleuderscheiben 18 den äußeren Arbeitsbreitenbereich.

Es ist jedoch auch möglich, daß für das Ausstreuen einer einzigen Düngersorte die oberen Schleuderscheiben 18 den äußeren Arbeitsbreitenbereich und die unteren Schleuderscheiben 18 den inneren Arbeitsbreitenbereich bestreuen. Hierzu ist es dann lediglich erforderlich, entsprechende Schleuderscheiben 18 bzw. Wurfschaufeln 19 einzusetzen.

Für das Ausstreuen einer einzigen Düngersorte sind andere Schleuderscheiben 18 und/oder Wurfschaufelsätze 19 als für das Ausstreuen von zwei Düngersorten vorgesehen.

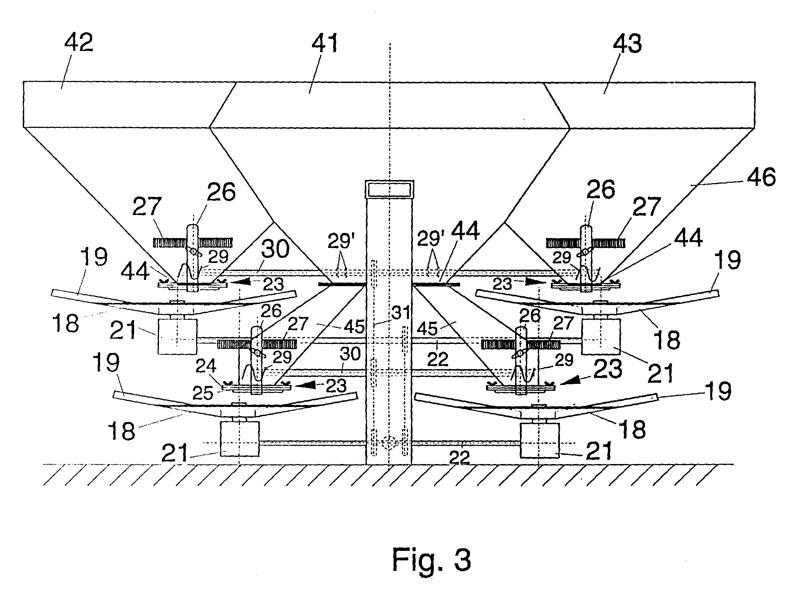

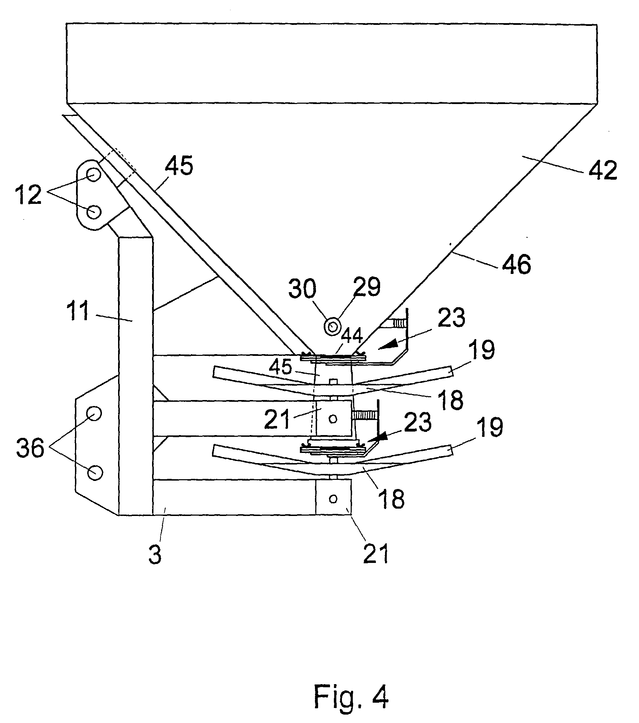

Der Schleuderdüngerstreuer gemäß den Fig.3 und 4 unterscheidet sich von dem Schleuderdüngerstreuer gemäß den Fig.1 und 2 zunächst dadurch, daß die Vorratsbehälter 41, 42 und 43 nicht hintereinander sondern nebeneinander angeordnet sind. Hierbei ist ein mittlerer Vorratsbehälter 41 und zwei seitlich zu dem mittleren Vorratsbehälter 41 angeordnete Vorratsbehälter 42 und 43 vorgesehen. Die unteren Trichterenden 44 der Vorratsbehälter 41, 42 und 43 liegen auf gleicher Höhe. Die vorderen und hinteren Trichterwände 45 und 46 der Vorratsbehälter 41, 42 und 43 fluchten in Seitenansicht gesehen miteinander.

Den unteren Enden 49 der Vorratsbehälter 41, 42 und 43 sind Dosierorgane 23 zugeordnet, die das Material den diesen Vorratsbehältern 41, 42 und 43 zugeordneten Schleuderscheiben 18, die mit Wurfschaufeln19 , die in Scheibenebene in unterschiedlichen Winkelanstellung einstellbar sind, zuführen. Die den äußeren Vorratsbehältern 42 und 43 zugeordneten Schleuderscheiben 18 sind höher angeordnet als die dem mittleren Vorratsbehälter 41 zugeordneten Schleuderscheiben 18. Die den unteren Trichterenden 44 des mittleren Vorratsbehälters 41 zugeordneten Schleuderscheiben 18 sind die das von den unteren Trichterenden 44 zu den unteren Schleuderscheiben 18 leitenden und als Zuleitungsschächte 45 ausgebildete Leitelemente zugeordnet. An dem unteren Ende jedes Zuleitungsschachtes 45 befindet sich ein Dosierorgan 23. Die Zuleitungsschächte 45 sind von den Trichterenden 44 des mittleren Vorratsbehälters 41 zur Seite und nach unten geführt.

Die Dosierorgane 23 entsprechen der Dosierorgane gemäß dem Schleuderstreuer in Fig.1 und 2.
Die das Material auf die unteren Schleuderscheiben 18 leitenden Zuleitungsschächte 44 enden unterhalb der oberen Schleuderscheiben 18 innerhalb der von den äußeren Teilen dieser Schleuderscheibe 18 beschriebenen Umlaufbahnen.

## Patentansprüche

1. Schleuderdüngerstreuer mit zumindest zwei in Fahrtrichtung gesehen hintereinander angeordneten Vorratsbehältern für die getrennte Mitführung von zumindest zwei verschiedenen Düngersorten, wobei jedem Vorratsbehälter jeweils zumindest zwei eigene Dosier- und Verteilorgane zugeordnet sind, dadurch gekennzeichnet, daß auf der Vorderseite des vorderen Vorratsbehälters (1) ein den Schleuderdüngerstreuer tragender Dreipunktkrahmen (11) angeordnet ist, daß die vordere obere Kante (35) des Vorratsbehälters (1) sowie die Unter- (36) und Oberlenkeranschlüsse (12) zumindest annähernd in einer senkrechten Ebene, die durch die vorderen Punkte (37) des größtmöglichen Schaufelendenumlaufkreises der unteren Schleuderscheibe (18) verläuft, liegen, und daß die hintere Kante (38) des hinteren Vorratsbehälters (2) bezogen auf die Fahrtrichtung (6) vor dem hintersten Punkt (39) des größtmöglichen Schaufelendenumlaufkreises der oberen Schleuderscheibe (18) liegt.

2. Schleuderdüngerstreuer nach Anspruch 1, dadurch gekennzeichnet, daß der Schwerpunktabstand (A) zumindest annähernd die Hälfte des größtmöglichen Durchmessers (D) der Schaufelendenumlaufkreise der unteren Schleuderscheiben (18) beträgt.

3. Schleuderdüngerstreuer nach einem oder mehreren der vorstehenden Ansprüche, dadurch gekennzeichnet, daß der größtmögliche Wurfschaufelendenumlaufkreis (D) etwa 1480mm beträgt.

4. Schleuderdüngerstreuer nach einem oder mehreren der vorstehenden Ansprüche, dadurch gekennzeichnet, daß der größtmögliche Wurfschaufelendenumlaufkreis (D) zumindest annähernd der Vorratsbehältererstreckung (B) des Schleuderdüngerstreuers, in Fahrtrichtung (6) gesehen, entspricht.

5. Schleuderdüngerstreuer nach einem oder mehreren der vorstehenden Ansprüche, dadurch gekennzeichnet, daß der Schwerpunktabstand (A) zu dem Unterlenkeranschluß (36) zwischen 60 und 80cm, vorzugsweise etwa 70 bis 75cm beträgt.

6. Schleuderdüngerstreuer nach einem oder mehreren der vorstehenden Ansprüche, dadurch gekennzeichnet, daß der Abstand (C), in Fahrtrichtung (6) gemessen, zwischen den Schleuderscheibenantriebswellen (20) der unteren und oberen Schleuderscheiben (18) um zumindest das 0,7-fache kleiner ist als der größtmögliche Wurfschaufelendenumlaufradius (D) der Schleuderscheiben (18).

7. Schleuderdüngerstreuer mit zumindest zwei in Fahrtrichtung gesehen hintereinander angeordneten Vorratsbehältern für die getrennte Mitführung von zumindest zwei verschiedenen Düngersorten, wobei jedem Vorratsbehälter jeweils zumindest zwei eigene Dosier- und Verteilorgane zugeordnet sind, dadurch gekennzeichnet, daß auf der Vorderseite des vorderen Vorratsbehälters (1) ein den Schleuderdüngerstreuer tragender Dreipunktanbaurahmen (11) angeordnet ist, daß den Vorratsbehältern (1, 2) ein in gleicher Höhe liegendes, gemeinsames und durchgehendes dachförmiges Mittelteil (7) zugeordnet ist, welches auf der Vorderseite mit dem Tragrahmen (3, 11) im Höhenbereich des oberen Dreipunktanlenkpunktes (12) verbunden ist.

8. Schleuderdüngerstreuer nach Anspruch 1 oder 7, dadurch gekennzeichnet, daß die äußeren seitlichen Trichterwände (13, 14) der vorderen und hinteren Vorratsbehälter (1, 2) miteinander fluchten.

9. Schleuderdüngerstreuer nach Anspruch 1 oder 7, dadurch gekennzeichnet, daß die unteren Trichterenden (16) des vorderen und des hinteren Vorratsbehälters (1, 2) auf gleicher Höhe liegen.

10. Schleuderdüngerstreuer nach Anspruch 1 oder 7, dadurch gekennzeichnet, daß die Vorderwand (17) des vorderen Vorratsbehälters (1) steiler als die Rückwand (17') des hinteren Vorratsbehälters (2) angeordnet ist.

11. Schleuderdüngerstreuer nach Anspruch 1 oder 7, wobei die dem vorderen Vorratsbehälter zugeordneten Schleuderscheiben in einer Ebene unterhalb der dem hinteren Vorratsbehälter zugeordneten Schleuderscheiben angeordnet sind, dadurch gekennzeichnet, daß jeweils ein das Material von den unteren Trichterenden (16) des vorderen Vorratsbehälters (1) zu den diesem Vorratsbehälter (1) zugeordneten Schleuderscheiben (18) leitendes Leitelement (28) angeordnet ist.

12. Schleuderdüngerstreuer nach einem oder mehreren der vorstehenden Ansprüche, dadurch gekennzeichnet, daß das Leitelement (28) als Zuführschacht mit an dessen unteren Enden angeordnetem Dosierorgan (23) ausgebildet ist.

13. Schleuderdüngerstreuer nach einem oder mehreren der vorstehenden Ansprüche, dadurch gekennzeichnet, daß die Drehachsen (32) der unteren Schleuderscheiben (18) in Seitenansicht gesehen sich etwa in der Mitte zwischen den unteren Trichterenden (16) der beiden Vorratsbehälter (1, 2) befinden.

14. Schleuderdüngerstreuer nach einem oder mehreren der vorstehenden Ansprüche, wobei zwischen den beiden Vorratsbehältern ein diese trennende Trennwand angeordnet ist, dadurch gekennzeichnet, daß an dem oberen Ende der Trennwand (4) sich ein das Befüllen der Vorratsbehälter (1, 2) erleichterndes Element (33) anschließt.

15. Schleuderdüngerstreuer nach Anspruch 14, dadurch gekennzeichnet, daß die Trennwand (4) zumindest teilweise herausnehmbar, absenkbar oder wegklappbar angeordnet ist.

16. Schleuderdüngerstreuer nach Anspruch 14, dadurch gekennzeichnet, daß das Befüllen der Vorratsbehälter (1, 2) erleichternde Element (33) als schwenkbar angeordnete Platte und/oder Schüttrutsche ausgebildet ist.

17. Schleuderdüngerstreuer nach Anspruch 15, dadurch gekennzeichnet, daß die Platte und/oder Schüttrutsche derart angelenkt ist, daß die Platte (33) und/oder Schüttrutsche hinter dem hinteren Vorratsbehälter (2) verbringbar ist.

18. Schleuderdüngerstreuer mit zumindest zwei Vorratsbehältern für die getrennte Mitführung von zumindest zwei verschiedenen Düngersorten, wobei für jede Düngersorte jeweils zumindest zwei eigene Dosierorgane und zumindest zwei eigene Verteilorgane zugeordnet sind, wobei ein mittlerer Vorratsbehälter und zwei seitlich zu dem mittleren Vorratsbehälter angeordnete Vorratsbehälter vorgesehen sind, dadurch gekennzeichnet, daß die unteren Trichterenden (44) der Vorratsbehälter (41, 42, 43) auf gleicher Höhe liegen, daß die vorderen und hinteren Trichterwände (45, 46) in Seitenansicht gesehen miteinander fluchten.

19. Schleuderdüngerstreuer nach Anspruch 18, wobei die dem mittleren Vorratsbehälter zugeordneten Schleuderscheiben in einer Ebene unterhalb der den beiden äußeren Vorratsbehältern zugeordneten Scheiben angeordnet sind, dadurch gekennzeichnet, daß jeweils ein das Material von den unteren Trichterenden (44) des mittleren Vorratsbehälters (41) zu den diesem Vorratsbehälter (41) zugeordneten Schleuderscheiben (18) leitende Leitelemente (45) angeordnet ist.

20. Schleuderdüngerstreuer nach einem oder mehreren der vorstehenden Ansprüche, dadurch gekennzeichnet, daß das Leitelement (45) als Zuleitungsschacht mit an dessen unteren Enden angeordnetem Dosierorgan (23) ausgebildet ist.

21. Schleuderdüngerstreuer nach einem oder mehreren der vorstehenden Ansprüche, dadurch gekennzeichnet, daß der Zuleitungsschacht (45) von den Trichterenden (44) des mittleren Vorratsbehälters (41) zur Seite und nach unten geführt ist.

22. Schleuderdüngerstreuer nach einem oder mehreren der vorstehenden Ansprüche, dadurch gekennzeichnet, daß die das Material auf die unteren Schleuderscheiben (18) leitende Elemente (45) unterhalb der oberen Schleuderscheiben (18) innerhalb der von den äußersten Teilen der Schleuderscheiben (18) beschriebenen Umlaufbahnen enden.
